# EUROPEAN PATENT APPLICATION

(11) **EP 1 379 087 A1**
(43) Date of publication of application: **07.01.2004**
(21) Application number: 03011339.3
(22) Date of filing: 19.05.2003
(51) Int. Cl.: H04N 7/173, H04N 7/15

(54) **Apparatus and method for the transmission and exchange of information using a television network**

(30) Priority: 20.05.2002 IT UD20020107
(71) Applicant: K Communication SpA, 35100 Padova (IT)
(72) Inventor: Di Nuzzo, Fabio, 35036 Montegrotto Terme (PD) (IT); Di Paolo, Vincenzo, 30037 Scorze (VE) (IT); Raffaelli, Alberto, 35128 Padova (IT)
(74) Representative: Petraz, Gilberto Luigi

(57) **Abstract**

Apparatus (10) for the transmission and exchange of information provided with television filming and recording elements (11, 12), which film and record audio/video information, transmission members (20), which transmit the audio/video information "live", and television reception elements (30), associated with every user, which receive the audio/video information. Every user is provided with interaction elements which allow the user to interact in real time with the audio/video information.

## Description

### FIELD OF THE INVENTION

The present invention concerns an apparatus to make television broadcasts of an interactive type, wherein the television presenter, or speaker, and the viewer are put into communication in order to exchange various types of information in real time.

To be more exact, the apparatus according to the invention provides the transmission via satellite of a particular television program, for example of an educational, commercial or other type, from a recording studio, and the reception of said program through an electronic processor that decodes, for example via Internet, the satellite signal by each individual place of reception, so that users can intervene in real time, to ask questions or exchange opinions directly with the television presenter, or speaker.

The present invention is applied particularly in the rapid transfer of competitive skills and knowledge, for example between the different members of a society, or more societies, in distance teaching or in places where there is a lack of infrastructures and/or teachers, in supplying consultancies, and so on.

The invention also concerns the method for the transmission and exchange of information that takes places between the television presenter or speaker and the user.

### BACKGROUND OF THE INVENTION

At present, known television stations broadcast programs wherein a presenter, or a speaker, makes a speech, gives a lesson or, more generally, supplies information of any type to a viewer that receives the information passively, without being able to participate in the debate, ask for further information, ask questions, request clarification, etc.

Moreover, these programs deal with pre-determined subjects that do not always excite the interest of the viewer and are directed towards an extremely wide range of users with regard to age, level of education, sex, ethnic group. They are, therefore, not specific programs, nor can they be personalized by the individual viewer or by a group of viewers with common interests.

Furthermore, for the same reasons, known television programs cannot concern school courses at various levels, for one or more groups of users, on specific topics to be dealt with daily, also because it is not possible to verify the state of preparation and the level of learning of the students following the courses.

Moreover, television stations do not allow companies, organizations, associations or suchlike to book their own space inside a television schedule to broadcast information interactively.

Applicant has devised and embodied the present invention to overcome these shortcomings of the state of the art and to obtain other advantages.

### SUMMARY OF THE INVENTION

The present invention is set forth and characterized essentially in the main claims, while the dependent claims describe other innovative characteristics of the present invention.

One purpose of the present invention is to achieve an apparatus for the interactive transmission of information, wherein a presenter, or speaker, can supply information on specific topics to one or more users, and wherein the latter can interact in real time with said presenter in order to ask questions, make requests, participate in the debate, or otherwise.

Another purpose of the present invention is to perfect a method for the interactive transmission of information which will allow said information to be exchanged in real time.

In accordance with these purposes, the apparatus for the transmission and exchange of information according to the present invention comprises: television recording means, such as for example one or more cameras arranged in a recording studio, or outside, and able to record audio/video information; wide band transmission means, for example via satellite, with fiber optics or otherwise able to transmit "live" the audio/video information recorded; and television reception means associated with every user and able to receive and display the aforesaid audio/video information.

According to a characteristic feature of the present invention, interaction means are provided associated with every user so as to allow the latter to interact in real time with the aforesaid audio/video information.

According to a preferential embodiment, the television recording studio is prepared to hold specific didactic lessons or conferences, to provide consultancies or otherwise, and to transmit said lessons or otherwise via satellite to one or more groups of users, connected by means of a telematic network. Each of said users connected in the network can thus contact the speaker in real time, and hence ask immediately for further explanations, clarifications, propose ideas, or have with the speaker any other type of remote interaction.

In this way, it is possible to organize private transmission of television programs, also addressed to a limited number of viewers.

According to a variant, if the apparatus is used for distance teaching, every user can be supplied with a small video camera, known as webcam, by means of which the speaker, who is in the studio, can observe the behavior of the users and can thus do oral tests or make verifications in order to evaluate the level of preparation and/or learning of each of them.

The information signal is transmitted by means of a prior processing of the audio/video signal recorded and of the multi media contents proposed by the editorial staff. The signal is converted into an IP multicast data flow, that is, a transmission of data through a telematic network wherein the data are shared with a plurality of users to allow only the vision thereof.

The flow is transferred by means of a terrestrial connection to a transmission station, where the audio/video signal is encapsulated in DVB (Digital Video Broadcasting) and transmitted to the satellite, which transmits the signal that can be received by normal satellite dishes.

According to the invention, the satellite signal is received and processed by two types of stations, one for multi-use and one for a single user.

Both stations are equipped with an electronic processor and a satellite reception card and are able to allow the user to interact with the recording studio through the telematic network, for example the Internet, allowing a continuous exchange of data, information and interaction.

With the apparatus according to the invention it is therefore possible to interact in real time with the television recording studio, and hence with the speaker, in order to ask questions, request clarification or otherwise, without passively receiving the information and data that are supplied.

### BRIEF DESCRIPTION OF THE DRAWINGS

These and other characteristics of the present invention will become apparent from the following description of a preferential form of embodiment, given as a non-restrictive example, with reference to the attached drawings wherein:
- fig. 1 shows a block diagram of the transmission apparatus according to the present invention;

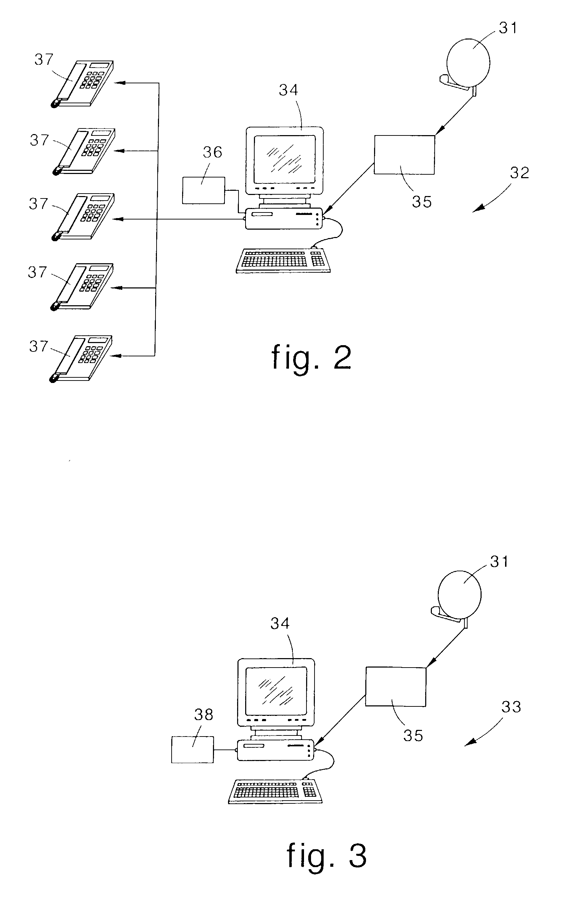

- fig. 2 shows schematically a reception station according to the present invention;
- fig. 3 shows a variant of fig. 2.

### DETAILED DESCRIPTION OF A PREFERENTIAL FORM OF EMBODIMENT OF THE INVENTION

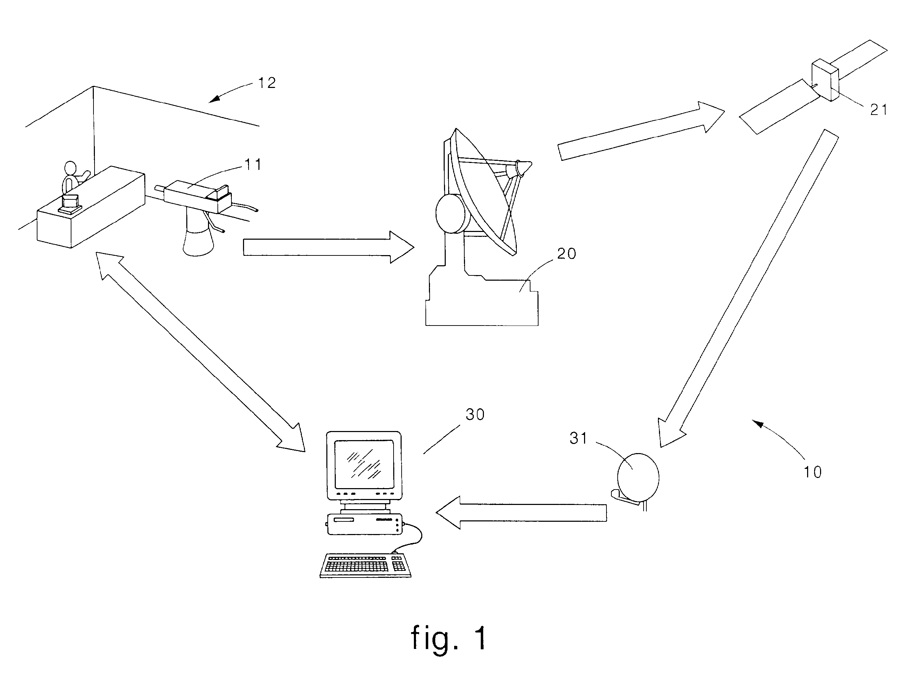

With reference to fig. 1, an apparatus 10 for the transmission and exchange of information according to the present invention comprises a camera 11 installed in a recording studio 12, a satellite transmission station 20 and reception stations 30 associated with the users and able to receive the audio/video information recorded by the camera 11.

In every reception station 30 there is a connection to a telematic network that connects directly to the recording studio 12, in order to allow the user to interact in real time with the audio/video information.

The television programs, concerning topics requested by the users, school lessons, conferences or otherwise are made "live" in the recording studio 12.

In the recording studio 12 there is an audio/video direction unit to manage several cameras 11 or other apparatus able to record the information which is to be transmitted, and a data archive for the users, wherein every speaker can find the personal data of each user connected, such as the name, a photograph, data on training received, hobbies, social position or otherwise.

To be more exact, the direction unit is able not only to manage the cameras and/or audio/video apparatus, but also to control the transmission, to manage the apparatus 10 by means of the server, and to supply technical support to the speaker in recording, information transmission and interactivity with the users.

The direction unit also deals with: the connection and simultaneous management of a high number of users; the interaction managed by the speaker with the users, guaranteeing a high quality of audio reception; the programming of the transmissions on the archive, constructing the scale and inserting auxiliary supports, for example VHS, files, DVD or other; the use of an intuitive and essential interface which makes it possible, in the case of school lessons, to govern the lesson and keep the pupils under control, so as to reply to the pupils' questions in real time, to test the pupils orally, to ask the pupils questions, which may not have been prepared in advance, with immediate results, to share applications and to file the lessons in the archive with the possibility of repeating them upon request, or suchlike.

The audio/video signal arriving from the camera 11 is processed by means of an audio/video mixer by the direction unit. The signal output from the mixer is conveyed into an encoder which digitalizes and compresses the signal into an IP multicast data flow, for example Mpeg1/Mpeg2. Subsequently, the IP data flow is sent, by means of an electronic device for the transmission of information data, for example a router that uses an ISDN connection (Integrated Services Digital Network), of a known type and not shown in the drawings, to the transmission station 20, where there is another router which reconstructs the signal into a single IP data flow.

The signal output from the encoder is equal to about 768 Kb/s, of which about 128 Kb/s are dedicated to the audio, and is transferred, as we have said, to the transmission station 20 by means of the electronic device for the transmission of information data, in 15 ISDN channels of about 64 Kb/s.

The signal transmitted to the transmission station 20 is encapsulated in DVB and transmitted to a satellite 21.

The satellite 21 can cover any area, for example the whole of Europe and part of Northern Africa, provided that the signal can be received by simple satellite dishes 31 of a diameter varying from 85 to 120 cm.

The reception stations 30 can be of two types, either for multi-use 32 or for a single user 33.

Both the reception stations 32, 33 are equipped with a satellite reception card 35, of a DVB/IP type, which allows to receive the signal, and with an electronic processor 34, which decodes the signal arriving from the satellite 21.

The reception stations 32, 33 are able to receive the audio/video information transmitted by the recording studio 12, with a band guaranteed to ensure constant quality of the images and/or sound transmitted.

The remote stations are able to communicate with a center which delivers the contents by means of synchronous interaction, that is, by means of "live" audio/video connections, or asynchronous, by means of recorded questions, electronic mail (e-mail) or otherwise.

The reception station for multi-use 32 provides a connection to the telematic network equal to about 56 Kb/s by means of a modem 36, which can also be arranged inside the electronic processor 34, and a peripheral telephone line 37, which allows each individual user to interact with the recording studio 12 and with the audio/video information produced therein.

The multi-use stations 32, in the event that the program concerns a school lesson, guarantee that the group of users present can intervene in the lesson and speak or exchange messages in real time with the teacher, reply to multiple choice tests set by the teacher and display the results in real time, and other.

The reception station for a single user 33, on the contrary, uses a connection to the telematic network equal to about 128 Kb/s by means of a modem 38, and the voice interaction is achieved by means of VOIP technology (Voice Over Internet Protocol), that is, the audio signal is compressed from analog to digital.

The reception station 33 allows the speaker, who is in the recording studio 12, to recognize the user, since a personal code is assigned to each one of them that allows the connection, recognition and interaction with the recording studio 12.

Moreover, in the event that the program concerns specific school lessons, each user has the possibility: to intervene in the lesson and to speak or exchange messages in real time with the teacher; to be able to see contributions immediately, such as slides, presentations, graphs or other; to reply to tests in real time and see the results immediately, to do the tests which have been recorded and record the results in the archive; to see the lessons which have been recorded; to display the calendar of lessons done; to display the profile and personal data of the teacher; to see the user's own profile, the archive of the lessons done and the results obtained in the tests and other.

With the apparatus 10 for the transmission and exchange of information according to the present invention it is possible to achieve television programs according to various requirements, in an extremely flexible and accurate manner, both with regard to the contents and also with regard to the didactic methodology (innovative and personalized techniques).

In fact, it is possible to prepare contents articulated according to planning models that allow to supply information and methodologies in a clear and sequential manner, to allow users optimum quality in the teaching and learning activity.

In this way it is possible to broadcast contents with a high additional value through the presence of authoritative testimonials of the specific sector and professional experts, and also to reinforce the users' knowledge through intensive training and meetings for programming and checking, and also to broadcast knowledge to achieve projects or publicize products.

Moreover, each of the groups of users share with the others a part of their schedule of television programs, creating a sort of "excess" of contents. As a result, the programming is no longer simply random, but has a vertical and horizontal matrix. For this reason a tutor has been identified for each group, particularly expert in the topics dealt with. In this way, a pool of experts is made up, called the internal editorial committee. The editorial committee contributes, along with the editorial staff, to define the matrix.

It is clear, however, that modifications and/or additions of parts can be made to the apparatus 10 as described heretofore, without departing from the field and scope of the present invention.

It is also clear that, although the present invention has been described with reference to specific examples, a person of skill in the art shall be able to embody other equivalent forms of apparatus and method for the transmission and exchange of information, all of which shall come within the field and scope of the present invention.

## Claims

1. Apparatus for the transmission and exchange of information comprising television filming and recording means (11, 12) able to film and record audio/video information, transmission means (20) able to transmit "live" said audio/video information, and television reception means (30) associated with every user and able to receive said audio/video information, **characterized in that** interaction means are associated with every user and are provided in order to allow said user to interact in real time with said audio/video information.

2. Apparatus as in claim 1, **characterized in that** said interaction means comprise a telematic network.

3. Apparatus as in claim 1, **characterized in that** said television recording means comprise at least a camera (11).

4. Apparatus as in claim 3, **characterized in that** said camera (11) is arranged inside a recording studio (12).

5. Apparatus as in claim 3, **characterized in that** said television recording means (11, 12) comprise a direction unit able to manage said camera (11).

6. Apparatus as in claim 1, **characterized in that** said transmission means comprise a transmission station (20) able to transmit said audio/video information to a satellite (21).

7. Apparatus as in any claim hereinbefore, **characterized in that** said television reception means (30) comprise a reception station (32, 33) provided with a satellite reception element (35) able to receive the signal arriving from said satellite (21), and an electronic processor (34) able to decode said signal arriving from the satellite (21) .

8. Apparatus as in claim 7, **characterized in that** said reception station (32) is able to host a plurality of users and comprises a modem connection (36) to a telematic network and a connection card connected to peripheral telephone lines (37).

9. Apparatus as in claim 7, **characterized in that** said reception station (33) is able to host a single user and comprises a modem connection (38) to said telematic network.

10. Method for the transmission and exchange of information by television filming and recording means (11, 12) able to film and record audio/video information, to television reception means (30), associated with every user and able to receive said audio/video information, comprising transmission means (20) able to transmit "live" said audio/video information, **characterized in that** each of said users is able to interact in real time with said audio/video information through interaction means.
